# EUROPEAN PATENT SPECIFICATION

(11) **EP 4 401 002 B1**
(45) Date of publication and mention of the grant of the patent: **19.11.2025**
(21) Application number: 22874297.9
(22) Date of filing: 17.06.2022
(51) Int. Cl.: G06Q 20/32, G06Q 20/34, G06Q 30/06, G06Q 50/40, G06K 7/10

(54) **DATA PROCESSING METHOD AND SYSTEM, AND TERMINAL AND COMPUTER-READABLE STORAGE MEDIUM**
DATENVERARBEITUNGSVERFAHREN UND -SYSTEM SOWIE ENDGERÄT UND COMPUTERLESBARES SPEICHERMEDIUM
PROCÉDÉ ET SYSTÈME DE TRAITEMENT DE DONNÉES, ET TERMINAL ET SUPPORT DE STOCKAGE LISIBLE PAR ORDINATEUR

(30) Priority: 28.09.2021 CN 202111144004
(43) Date of publication of application: 17.07.2024
(73) Proprietor: ZTE Corporation, Shenzhen, Guangdong 518057 (CN)
(72) Inventor: LI, Xiaoliang, Shenzhen, Guangdong 518057 (CN); QU, Guotao, Shenzhen, Guangdong 518057 (CN); GAO, Jie, Shenzhen, Guangdong 518057 (CN); HUANG, Kaihua, Shenzhen, Guangdong 518057 (CN); LI, Chenhui, Shenzhen, Guangdong 518057 (CN); MEI, Xiangxin, Shenzhen, Guangdong 518057 (CN); WANG, Qi, Shenzhen, Guangdong 518057 (CN); DENG, Peng, Shenzhen, Guangdong 518057 (CN)
(74) Representative: Zoli, Filippo
(86) International application number: PCT/CN2022/099524
(87) International publication number: WO 2023/050900

(56) References cited:
- WO-A2-2007/057786
- CN-A- 104 282 046
- CN-A- 106 845 971
- CN-A- 108 089 931
- CN-U- 206 312 238
- CN-U- 208 298 224
- US-A1- 2010 136 913
- US-A1- 2012 246 074
- US-A1- 2018 096 342
- TM NCI: "NFC Controller Interface (NCI) Specification Technical Specification NFC Forum Contents", 6 November 2012 (2012-11-06), XP055388030, Retrieved from the Internet <URL:http://www.cardsys.dk/download/NFC_Docs/NFC Controller Interface (NCI) Technical Specification.pdf> [retrieved on 20170705]

## Description

### TECHNICAL FIELD

Embodiments of the present disclosure relate to the field of Internet technologies, and more particularly, to a data processing method and system, a terminal device, and a computer-readable storage medium.

### BACKGROUND

With the rapid development of communication technologies, Near Field Communication (NFC) has been gradually applied. NFC is a short-distance high-frequency wireless communication technology that enables simple and secure two-way interaction between a plurality of electronic devices. NFC technology evolves from the integration of a contactless Radio Frequency Identification (RFID) technology and an interconnection technology, can implement functions of an inductive card reader, an inductive card, and point-to-point communication on a single chip, allowing the chip to identify and exchange data with compatible devices over a short distance.

A terminal device equipped with NFC technology has the capability to emulate a physical Radio Frequency (RF) card. This means the terminal device can act as a physical RF card, such as an access control card, a bank card, or a public transportation card. To make a transaction, a user only needs to put the terminal device simulating the physical RF card near a card reader and enter a password to confirm the transaction, or only needs to swipe the card directly.

However, there are several limitations to the emulation of physical RF cards by terminal devices with NFC technology. For example, the operator of the physical RF cards or the Point of Sales (POS) terminals manufacturer may not allow such devices to emulate physical RF cards. As a result, the terminal device cannot act as a physical RF card, and the terminal device's owner must use the actual RF card for payments. Since data processing involving physical RF cards can be delayed, users are unable to immediately access their payment records via the terminal device. This delay is particularly problematic for an elderly or a child using the physical RF card, as it prevents real-time monitoring of their transactions.

CN108089931A relates to a method and a device of synchronization of SE (Security Element) information and wearable payment equipment. The method includes: monitoring a change of the information in an SE by an MCU (Microcontroller Unit); and when the change of the information in the SE is monitored, reading the information of the SE by the MCU, and storing the same into a memory.

US20180096342A1 relates to a mobile terminal having an offline trade notification function and a notification method that is implemented using the mobile terminal. The mobile terminal having an offline trade notification function comprises: a storage module for storing an offline trade application described below; a wireless communication module having a field inductor that is used for detecting surrounding radio frequency signals and for generating a control signal; a processing module which generates an interruption event when it receives the control signal; an application module which can read trade data of the offline trade application according to the notification from the processing module, calculate trade data variation of the offline trade application, and inform an input/output module described below of the trade data variation; and the input/output module for informing the user of the event of data variation.

US20100136913A1 relates to a method of communicating a message relating to a transaction of a contactless application effected between a mobile terminal equipped with a contactless module and equipment, comprising the steps of detecting the end of the transaction between the terminal and the equipment, obtaining a message containing at least information identifying said application and end of transaction information, and communicating said message.

### SUMMARY

The invention is set out in the appended set of claims.

A main objective of embodiments of the present disclosure is to provide a data processing method and system, a terminal device, and a computer-readable storage medium.

To achieve the above objective, an embodiment of the present disclosure provides a data processing method according to claim 1.

To achieve the above objective, an embodiment of the present disclosure provides a data processing system according to claim 12.

To achieve the above objective, an embodiment of the present disclosure further provides a terminal device according to claim 13.

To achieve the above objective, an embodiment of the present disclosure provides a computer-readable storage medium according to claim 14.

### BRIEF DESCRIPTION OF DRAWINGS

FIG. 1 is a flowchart one of a data processing method according to an embodiment of the present disclosure falling outside the scope of the present invention as claimed;
FIG. 2 is a side view one of a first terminal device according to an embodiment of the present invention as claimed;
FIG. 3 is a side view two of a first terminal device according to an embodiment of the present invention as claimed;
FIG. 4 is a rear view of a first terminal device according to an embodiment of the present invention as claimed;
FIG. 5 is a flowchart two of a data processing method according to an embodiment of the present invention as claimed;
FIG. 6 is a flowchart of monitoring a location of a second terminal device according to another embodiment of the present disclosure falling outside the scope of the present invention as claimed;
FIG. 7 is a flowchart three of a data processing method according to another embodiment of the present disclosure falling outside the scope of the present invention as claimed;
FIG. 8 is a flowchart four of a data processing method according to another embodiment of the present invention as claimed;
FIG. 9 is a schematic diagram of a data processing system according to another embodiment of the present invention as claimed; and
FIG. 10 is a schematic structural diagram of a terminal device according to another embodiment of the present invention as claimed.

### DETAILED DESCRIPTION

Objectives, technical schemes and advantages of the embodiments of the present disclosure will be clear from a detailed description of the embodiments of the present application in conjunction with the drawings. ,

An embodiment of the present application relates to a data processing method, which is applied to a terminal device.

In the embodiments of the present application, the terminal device may be a mobile phone, a tablet computer, a smart watch, smart glasses, a smart band, etc., supporting an NFC function. This embodiment and the following embodiments are described using a smart phone supporting the NFC function as an example.

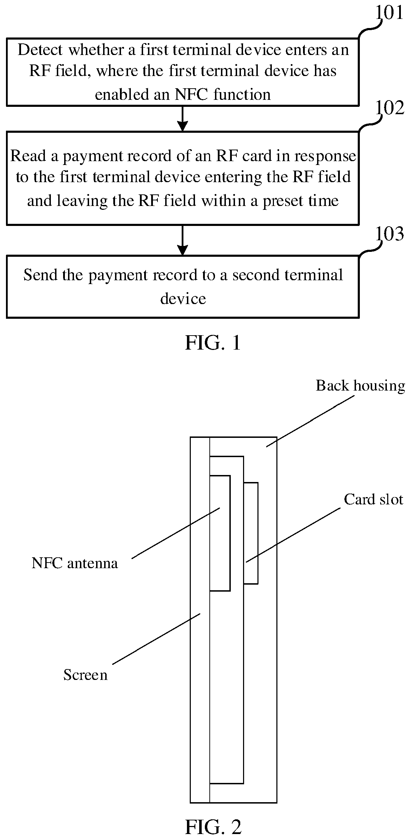

FIG. 1 shows a detailed process of the data processing method of this embodiment, which includes the following steps 101 to 103.

At step 101, it is detected whether a first terminal device enters an RF field, where the first terminal device has enabled an NFC function.

At step 102, a payment record of an RF card is read when the first terminal device enters the RF field and leaves the RF field within a preset time.

In an implementation, the NFC function of the first terminal device may be enabled all the time to detect in real time whether the first terminal device enters the RF field. When the first terminal device detects that it enters the RF field and leaves the RF field within the preset time, the first terminal device reads the payment record of the RF card. The preset time may be set by those having ordinary skills in the art according to actual needs, which is not particularly limited in the embodiments of the present disclosure.

In an embodiment, the first terminal device is provided with the RF card, the RF card provided in the first terminal device is a physical RF card, a card slot is provided on an inner side or an outer side of a back housing of the first terminal device, and the card slot is configured for fixing the RF card. The card slot is generally arranged at a position close to an NFC antenna of the first terminal device. The physical RF card may be a subway card, a bus card, a campus card, etc., which is not particularly limited in the embodiments of the present disclosure.

FIG. 2 is a side view of the first terminal device when the card slot is provided on the inner side of the back housing of the first terminal device. In an example, as shown in FIG. 2, the position of the card slot corresponds to the position of the NFC antenna.

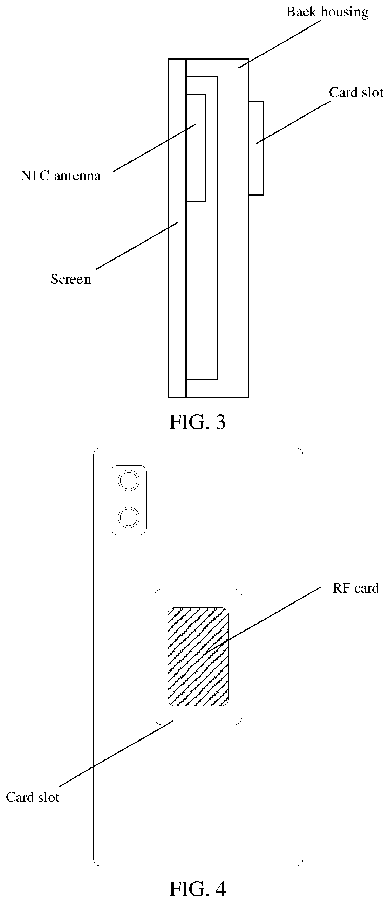

FIG. 3 is a side view of the first terminal device when the card slot is provided on the outer side of the back housing of the first terminal device, and FIG. 4 is a rear view of the first terminal device when the card slot is provided on the outer side of the back housing of the first terminal device. In an example, as shown in FIG. 3 and FIG. 4, the position of the card slot corresponds to the position of the NFC antenna, and the RF card is fixed in the card slot.

In an example, a card clip may be arranged on the outer side of the back housing of the first terminal device, the card clip is configured for fixing the RF card, and a position of the card clip corresponds to the position of the NFC antenna.

In an embodiment, when the RF card is in an RF field, the RF card may perform a payment activity via the RF field. In practice, the RF field may be generated by a device such as a subway automatic gate machine, a bus card reader, or a POS machine, or may be generated by a wireless charger based on an RF charging technology. It can be understood that the RF card can perform a payment activity in the RF field generated by a device such as the subway automatic gate machine, the bus card reader, or the POS machine, but cannot perform a payment activity in the RF field generated by the wireless charger. Therefore, in this embodiment, it may need to be determined whether the first terminal device leaves the RF field within a preset time after entering the RF field. The preset time may be set to be short, for example, 10 seconds. If the first terminal device determines that it enters the RF field and leaves the RF field within 10 seconds, the first terminal device may determine that the RF field is generated by a device such as the subway automatic gate machine, the bus card reader, or the POS machine, and the RF card has performed a payment activity. The first terminal device reads a payment record of the RF card. In this way, it can be determined more accurately whether the RF card performs a payment, to better meet the actual needs of the user.

In an embodiment, if the first terminal device does not detect its entry into the RF field, the first terminal device may remain in the detection state, until the first terminal device detects its entry the RF field.

In an example, the first terminal device may detect according to an identification message whether the first terminal device enters the RF field. The identification message at least includes an RF_FIELD_INFO_NTF message in an NFC Controller Interface (NCI) protocol. When the first terminal device enters the RF field, the first terminal device can detect according to the identification message such as the RF_FIELD_INFO_NTF message whether the first terminal device leaves the RF field within a preset time. The RF_FIELD_INFO_NTF message is a standard message specified in the NCI protocol. The RF_FIELD_INFO_NTF message is more accurate and reliable in detecting whether the first terminal device enters or leaves the RF field.

At step 103, the payment record is sent to a second terminal device.

In an implementation, after reading the payment record of the RF card, the first terminal device may send the acquired payment record of the RF card to the second terminal device for viewing on the second terminal device.

In an example, after acquiring the payment record of the RF card, the first terminal device may send the acquired payment record of the RF card to the second terminal device in the form of a Short Messaging Service (SMS) message according to a phone number of the second terminal device, for viewing on the second terminal device.

In an example, after acquiring the payment record of the RF card, the first terminal device may notify a pre-developed payment query application, such that the payment query application sends the acquired payment record of the RF card to the registered second terminal device in the form of an in-application short message.

In an embodiment, after sending the payment record to the second terminal device, the first terminal device may start a new round of monitoring and continue to detect its entry into an RF field.

According to the data processing method and system, the terminal, and the computer-readable storage medium, provided in the present disclosure, a first terminal device has enabled an NFC function, the first terminal device is provided with an RF card, and the RF card is configured for making a payment via an RF field. The first terminal device can detect in real time whether it enters an RF field. If the first terminal device detects that it enters an RF field and leaves the RF field within a preset time, the first terminal device may read the RF card provided therein to acquire a payment record of the RF card. After acquiring the payment record of the RF card, the first terminal device may send the payment record of the RF card to a second terminal device, for viewing on the second terminal device. When the first terminal device cannot simulate the RF card, the holder of the first terminal device has to use the RF card for payment. Because there is a delay in data processing, i.e., updating of the payment record, the holder of the second terminal device cannot monitor in real time the payment of the holder of the first terminal device. In this embodiment, with the arrangement of the RF card in the first terminal device, when the first terminal device detects that it enters an RF field and leaves the RF field within a preset time, the first terminal device determines that a payment event occurs. In this case, the first terminal device reads the RF card to acquire the payment record of the RF card, and sends the payment record to the second terminal device in real time. In this way, the user, i.e., the holder of the second terminal device, can monitor in real time the payments made by the holder of the first terminal device who is an elderly person or child, thereby improving use experience of the user.

Another embodiment of the present disclosure relates to a data processing method.

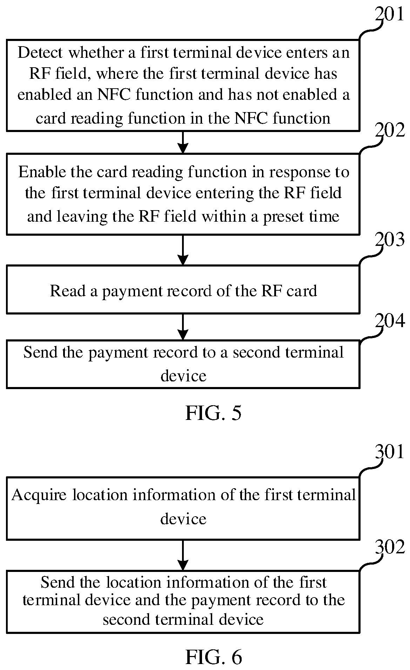

FIG. 5 is a flowchart of the data processing method of this embodiment, including the following steps 201 to 204.

At step 201, it is detected whether a first terminal device enters an RF field, where the first terminal device has enabled an NFC function and has not enabled a card reading function in the NFC function.

At step 202, the card reading function is enabled when the first terminal device enters the RF field and leaves the RF field within a preset time.

In an implementation, the NFC function of the first terminal device is enabled all the time, but the first terminal device does not enable the card reading function in the NFC function before leaving the RF field. When the first terminal device determines that it enters the RF field and leaves the RF field within the preset time, the first terminal device enables the card reading function in the NFC function.

In an embodiment, considering that the first terminal device generates an RF field after enabling the card reading function in the NFC function, if the first terminal device enters an RF field generated by a device such as a subway automatic gate machine, a bus card reader, or a POS machine, it means that the RF card arranged in the first terminal device is in two RF fields at the same time. In this case, the first terminal device may fail to read the RF card, and a payment made by the RF card may also fail. Therefore, in this embodiment, the NFC function is refined, and the card reading function in the NFC function is enabled only after the first terminal device leaves the RF field, to ensure that the RF card enters only one RF field at a time, and prevent the payment failure caused by interference in the payment process of the RF card.

At step 203, a payment record of the RF card is read.

Step 203 is substantially the same as step 102, so the details will not be repeated herein.

At step 204, the payment record is sent to a second terminal device.

In an embodiment, after sending the payment record to the second terminal device, the first terminal device may disable the card reading function in the NFC function to ensure that the first terminal device does not generate an RF field. In this way, when the first terminal device enters an RF field next time, the RF card enters only an RF field generated by a device such as a subway automatic gate machine, a bus card reader, or a POS machine, thereby ensuring that the RF card can smoothly perform a payment activity.

In this embodiment, before the first terminal device leaves the RF field, the first terminal device does not enable the card reading function in the NFC function; and reading a payment record of the RF card when the first terminal device enters the RF field and leaves the RF field within a preset time includes: enabling the card reading function when the first terminal device enters the RF field and leaves the RF field within the preset time; and reading the payment record of the RF card. By default, the first terminal device does not enable the card reading function. Only when the first terminal device detects that it enters an RF field and leaves the RF field within the preset time, the first terminal device enables the card reading function to read the payment record of the RF card. This can effectively prevent the RF field of the first terminal device from interfering with the payment of the RF card and ensure the normal payment of the RF card.

In another embodiment, the holder of the second terminal device may monitor the location of the holder of the first terminal device in real time by performing steps 301 to 302 shown in FIG. 6.

At step 301, location information of the first terminal device is acquired.

At step 302, the location information of the first terminal device and the payment record are sent to the second terminal device.

In an implementation, after reading the payment record of the RF card, the first terminal device may enable a positioning function, acquire a real-time location of the first terminal device, generate location information of the first terminal device, and send the location information of the first terminal device and the payment record to the second terminal device, for viewing on the second terminal device.

In an embodiment, the user not only cares about payments made by the elderly person or child, but also cares more about where the elderly person or child makes the payments. For example, the first terminal device is held by a student, and a payment record is purchase of instant noodles. Purchase of instant noodles from a school supermarket and purchase of instant noodles from an Internet café are of different importance to the user. Therefore, in this embodiment, the first terminal device may acquire the location of the first terminal device in real time after acquiring the payment record, and send the location information of the first terminal device and the payment record to the second terminal device, for the user to monitor where the holder of the first terminal device makes the payment, to better meet usage demands of the user.

In an example, after acquiring the location information of the first terminal device, the first terminal device may carry the location information of the first terminal device in the payment record. In this case, the sending of the payment record by the first terminal device to the second terminal device for viewing on the second terminal device means that the location information of the first terminal device is sent to the second terminal device for viewing on the second terminal device. In some scenarios, the payment record of the RF card already carries location information. For example, in the case of subway ride consumption, the payment record may show that the first terminal device enters at Station A and exits at Station B. In this case, the location information of the first terminal device is carried in the payment record, and the first terminal device may only need to send the payment record to the second terminal device, thereby reducing the amount of data exchanged to better meet usage demands of the user.

Another embodiment of the present disclosure relates to a data processing method.

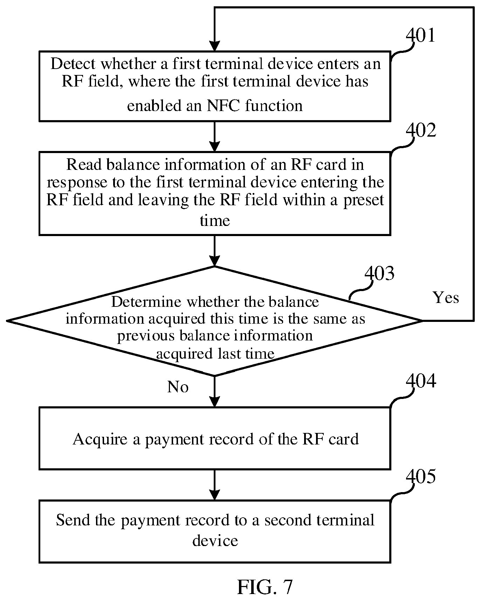

FIG. 7 is a flowchart of the data processing method of this embodiment, including the following steps 401 to 405.

At step 401, it is detected whether a first terminal device enters an RF field, where the first terminal device has enabled an NFC function.

Step 401 is substantially the same as step 101, so the details will not be repeated herein.

At step 402, balance information of an RF card is read when the first terminal device enters the RF field and leaves the RF field within a preset time.

In an implementation, when the first terminal device detects that it enters the RF field and leaves the RF field within the preset time, the first terminal device may read the balance information of the RF card. The balance information may represent an account balance in the RF card.

At step 403, it is determined whether the balance information acquired this time is the same as previous balance information acquired last time. If yes, step 401 is executed; otherwise, step 404 is executed.

At step 404, a payment record of the RF card is acquired.

In an embodiment, after acquiring the balance information of the RF card, the first terminal device can determine whether the balance information acquired this time is the same as the previous balance information acquired last time. If the balance information acquired this time is different from the previous balance information acquired last time, it indicates that the RF card has made a payment, and the first terminal device can acquire the payment record of the RF card.

In an example, the first terminal device determines that the balance information acquired this time is the same as the previous balance information acquired last time, indicating that the RF card, though having entered the RF field, has not made a payment. In this case, the first terminal device may do not need to acquire the payment record, and the first terminal device exits the current payment query process, and performs a next round of monitoring to continue to detect whether the first terminal device enters an RF field.

At step 405, the payment record is sent to a second terminal device.

Step 405 is substantially the same as step 103, so the details will not be repeated herein.

In this embodiment, acquiring a payment record of the RF card includes: reading the RF card and acquiring balance information of the RF card; and when the balance information is the same as previous balance information acquired last time, determining that no payment has been made using the RF card, and detecting again whether the first terminal device enters the RF field; or when the balance information is different from the previous balance information acquired last time, acquiring the payment record of the RF card. When the first terminal device detects that it enters an RF field and leaves the RF field within a preset time, the first terminal device may perform second detection to detect whether the balance of the RF card changes. If the balance does not change, it indicates that the RF card has not made a payment, and the first terminal device re-detects whether the first terminal device enters an RF field. If the balance changes, it indicates that the RF card has made a payment, and the first terminal device acquires the payment record of the RF card. This can effectively prevent the first terminal device from sending useless blank payment records to the second terminal device, thereby reducing unnecessary information exchange and saving communication resources.

Another embodiment of the present disclosure relates to a data processing method.

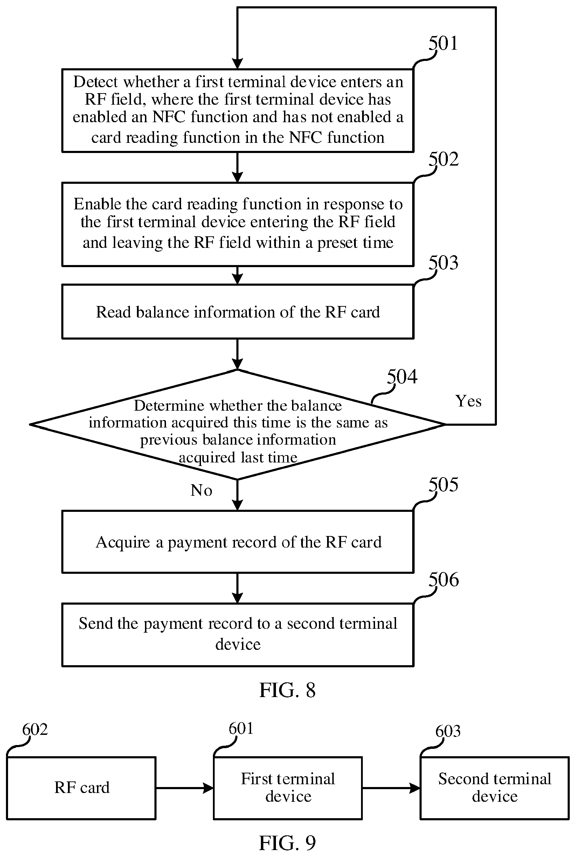

FIG. 8 is a flowchart of the data processing method of this embodiment, including the following steps 501 to 506.

At step 501, it is detected whether a first terminal device enters an RF field, where the first terminal device has enabled an NFC function and has not enabled a card reading function in the NFC function.

At step 502, the card reading function is enabled when the first terminal device enters the RF field and leaves the RF field within a preset time.

At step 503, balance information of the RF card is read.

At step 504, it is determined whether the balance information acquired this time is the same as previous balance information acquired last time. If yes, step 501 is executed; otherwise, step 505 is executed.

At step 505, a payment record of the RF card is acquired.

At step 506, the payment record is sent to a second terminal device.

Another embodiment of the present disclosure relates to a data processing system.

FIG. 9 is a schematic diagram of the data processing system of this embodiment, which includes a first terminal device 601, an RF card 602, and a second terminal device 603. The first terminal device 601 is provided with the RF card 602.

The first terminal device 601 is configured for detecting whether the first terminal device 601 enters an RF field, reading a payment record of the RF card 602 when the first terminal device 601 enters the RF field and leaves the RF field within a preset time, and sending the payment record to the second terminal device 603.

The RF card 602 is configured for performing a payment via the RF field when the first terminal device 601 enters the RF field and leaves the RF field within the preset time.

The second terminal device 603 is configured for receiving the payment record sent by the first terminal device 601.

It can be seen that this embodiment is a system embodiment corresponding to the foregoing method embodiments, and this embodiment may be implemented in combination with the foregoing method embodiments. The related technical details and technical effects mentioned in the foregoing method embodiments are still valid in this embodiment, and the details will not be repeated herein in order to reduce repetition. Correspondingly, the related technical details mentioned in this embodiment are also applicable to the above embodiments.

It is to be noted that each module involved in this embodiment is a logic module. In practical applications, a logic unit may be a physical unit or a part of a physical unit, or may be implemented by a combination of a plurality of physical units. In addition, in order to highlight the innovative part of the present application, units that are not closely related to the technical problem to be solved in the present application are not introduced in this embodiment, but this does not mean that there are no other units in this embodiment.

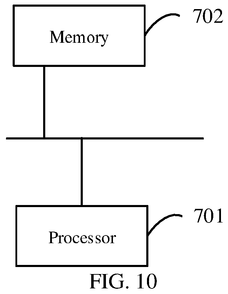

Another embodiment of the present disclosure relates to a terminal device. As shown in FIG. 10, the terminal device includes: at least one processor 701; and a memory 702 communicably connected to the at least one processor 701. The memory 702 stores instructions executable by the at least one processor 701 which, when executed by the at least one processor 701, causes the at least one processor 701 to implement the data processing method according to the foregoing method embodiments.

The memory and the processor are connected by a bus. The bus may include any number of interconnected buses and bridges. The bus connects various circuits of one or more processors and the memory together. The bus may also connect together a peripheral device, a voltage regulator, a power management circuit, and other circuits, which are all well known in the art and therefore will not be detailed herein. A bus interface provides an interface between the bus and a transceiver. The transceiver may be one element or a plurality of elements, for example, a plurality of receivers and transmitters, and provides a unit for communicating with various other apparatus over a transmission medium. Data processed by the processor is transmitted over a wireless medium through an antenna. The antenna further receives data and transmits the data to the processor.

The processor is responsible for managing the bus and general processing and may also provide various functions including timing, peripheral interfaces, voltage regulation, power management and other control functions. The memory may be configured to store data used by the processor in performing operations.

Another embodiment of the present disclosure relates to a computer-readable storage medium, storing a computer program which, when executed by a processor, causes the processor to implement the foregoing method embodiments.

It may be understood by those having ordinary skills in the art that all or some of the steps of the methods in the above embodiments may be performed by a program instructing related hardware. The program is stored in a storage medium, and includes several instructions to cause a device (which may be a single chip microcomputer, a chip, etc.) or a processor to perform all or some of the steps of the methods described in the embodiments of the present application. The foregoing storage medium includes: any medium that can store program code, such as a Universal Serial Bus (USB) flash drive, a removable hard disk, a Read-Only Memory (ROM), a Random Access Memory (RAM), a magnetic disk, or an optical disk.

According to the data processing method provided in the present disclosure, a first terminal device has enabled an NFC function, the first terminal device is provided with an RF card, and the RF card is configured for making a payment via an RF field. The first terminal device may detect in real time whether it enters an RF field. If the first terminal device detects that it enters an RF field and leaves the RF field within a preset time, the first terminal device may read a payment record of the RF card provided therein. After acquiring the payment record of the RF card, the first terminal device may send the payment record of the RF card to a second terminal device, for viewing on the second terminal device. When the first terminal device cannot simulate the RF card, the holder of the first terminal device has to use the RF card for payment. Because there is a delay in data processing, i.e., updating of the payment record, the holder of the second terminal device cannot monitor in real time the payment of the holder of the first terminal device. In this embodiment, with the arrangement of the RF card in the first terminal device, when the first terminal device detects that it enters an RF field and leaves the RF field within a preset time, the first terminal device determines that a payment event occurs. In this case, the first terminal device reads the payment record of the RF card, and sends the payment record to the second terminal device in real time. In this way, the user, i.e., the holder of the second terminal device, can monitor in real time the payments made by the holder of the first terminal device who is an elderly person or child, thereby improving use experience of the user. The foregoing storage medium includes: any medium that can store program code, such as a Universal Serial Bus (USB) flash drive, a removable hard disk, a Read-Only Memory (ROM), a Random Access Memory (RAM), a magnetic disk, or an optical disk.

According to the data processing method provided in the present disclosure, a first terminal device has enabled an NFC function, the first terminal device is provided with an RF card, and the RF card is configured for making a payment via an RF field. The first terminal device may detect in real time whether it enters an RF field. If the first terminal device detects that it enters an RF field and leaves the RF field within a preset time, the first terminal device may read a payment record of the RF card provided therein. After acquiring the payment record of the RF card, the first terminal device may send the payment record of the RF card to a second terminal device, for viewing on the second terminal device. When the first terminal device cannot simulate the RF card, the holder of the first terminal device has to use the RF card for payment. Because there is a delay in data processing, i.e., updating of the payment record, the holder of the second terminal device cannot monitor in real time the payment of the holder of the first terminal device. In this embodiment, with the arrangement of the RF card in the first terminal device, when the first terminal device detects that it enters an RF field and leaves the RF field within a preset time, the first terminal device determines that a payment event occurs. In this case, the first terminal device reads the payment record of the RF card, and sends the payment record to the second terminal device in real time. In this way, the user, i.e., the holder of the second terminal device, can monitor in real time the payments made by the holder of the first terminal device who is an elderly person or child, thereby improving use experience of the user.

## Claims

1. A data processing method, performed by
a first terminal device, the method comprising:
detecting whether the first terminal device enters a Radio Frequency, RF, field, wherein the first terminal device has enabled a Near Field Communication, NFC, function, the first terminal device is provided with an RF card, and the RF card is configured for making a payment via the RF field (101);
reading a payment record of the RF card in response to the first terminal device entering the RF field and leaving the RF field within a preset time (102); and
sending the payment record to a second terminal device (103);
**characterized in that**,
before the first terminal device leaves the RF field, the first terminal device does not enable a card reading function in the NFC function; and
reading a payment record of the RF card in response to the first terminal device entering the RF field and leaving the RF field within a preset time (102) comprises:
enabling the card reading function in response to the first terminal device entering the RF field and leaving the RF field within the preset time (202); and
reading the payment record of the RF card (203).

2. The data processing method of claim 1, wherein after reading the payment record of the RF card (203), the method comprises:
acquiring location information of the first terminal device (301); and
sending the payment record to a second terminal device (103) comprises:
sending the location information of the first terminal device and the payment record to the second terminal device (302).

3. The data processing method of claim 2, wherein sending the location information of the first terminal device and the payment record to the second terminal device (302) comprises:
carrying the location information of the first terminal device in the payment record.

4. The data processing method of any one of claims 1 to 3, wherein reading the payment record of the RF card (203) comprises:
reading the RF card and acquiring balance information of the RF card; and
in response to the balance information being the same as previous balance information acquired last time, determining that no payment has been made using the RF card, and detecting again whether the first terminal device enters the RF field; or
in response to the balance information being different from the previous balance information acquired last time, acquiring the payment record of the RF card.

5. The data processing method of claim 1, wherein that the first terminal device is provided with an RF card comprises:
a card slot is provided on an inner side or an outer side of a back housing of the first terminal device, and the card slot is configured for fixing the RF card.

6. The data processing method of any one of claims 1 to 3, wherein detecting whether a first terminal device enters an RF field comprises:
detecting according to an identification message whether the first terminal device enters the RF field, wherein the identification message at least comprises an RF_FIELD_INFO_NTF message; and
detecting whether the first terminal device leaves the RF field within the preset time comprises:
detecting according to the identification message whether the first terminal device leaves the RF field within the preset time.

7. The data processing method of claim 1, wherein the NFC function of the first terminal device is enabled all the time to detect in real time whether the first terminal device enters the RF field.

8. The data processing method of claim 5, wherein the card slot is arranged at a position close to an NFC antenna of the first terminal device.

9. The data processing method of claim 5, a card clip is arranged on the outer side of the back housing of the first terminal device, the card clip is configured for fixing the RF card, and a position of the card clip corresponds to a position of an NFC antenna.

10. The data processing method of claim 1, in response to the first terminal device not detecting its entry into the RF field, the first terminal device remains in a detection state, until the first terminal device detects its entry into the RF field.

11. The data processing method of claim 1, after acquiring the payment record of the RF card, sending, by the first terminal device, the acquired payment record of the RF card to the second terminal device in the form of a Short Messaging Service (SMS) message according to a phone number of the second terminal device.

12. A data processing system, comprising a first terminal device (601), a Radio Frequency, RF, card (602), and a second terminal device (603), wherein the first terminal device (601) is provided with the RF card (602);
the first terminal device (601) is configured for detecting whether the first terminal device (601) enters an RF field, reading a payment record of the RF card (602) in response to the first terminal device (601) entering the RF field and leaving the RF field within a preset time, and sending the payment record to the second terminal device (603);
the RF card (602) is configured for making a payment via the RF field in response to the first terminal device (601) entering the RF field and leaving the RF field within the preset time; and
the second terminal device (603) is configured for receiving the payment record sent by the first terminal device (601);
**characterized in that**,
the first terminal device (601) is configured to, before the first terminal device (601) leaves the RF field, not enable a card reading function in the NFC function; and
reading a payment record of the RF card (602) in response to the first terminal device (601) entering the RF field and leaving the RF field within a preset time comprises:
enabling the card reading function in response to the first terminal device (601) entering the RF field and leaving the RF field within the preset time; and
reading the payment record of the RF card (602).

13. A terminal device, comprising:
at least one processor (701); and
a memory (702) communicably connected to the at least one processor (701), wherein:
the memory (702) stores instructions executable by the at least one processor (701) which, when executed by the at least one processor (701), causes the at least one processor (701) to carry out the data processing method of any one of claims 1 to 11.

14. A computer-readable storage medium, storing a computer program which, when executed by a processor, causes the processor to carry out the data processing method of any one of claims 1 to 11.

## Patentansprüche

1. Datenverarbeitungsverfahren, das von einer ersten Endgerätevorrichtung durchgeführt wird, das Verfahren umfassend:
Erkennen, ob die erste Endgerätevorrichtung in ein Feld von Hochfrequenz, HF, eintritt, wobei in der ersten Endgerätevorrichtung eine Funktion für Nahfeldkommunikation, NFC, aktiviert ist, die erste Endgerätevorrichtung mit einer HF-Karte versehen ist, und die HF-Karte konfiguriert ist, um eine Zahlung über das HF-Feld (101) vorzunehmen;
Lesen eines Zahlungsdatensatzes der HF-Karte als Reaktion darauf, dass die erste Endgerätevorrichtung in das HF-Feld eintritt und das HF-Feld innerhalb einer voreingestellten Zeit (102) wieder verlässt; und
Senden des Zahlungsdatensatzes an eine zweite Endgerätevorrichtung (103);
**dadurch gekennzeichnet, dass**
die erste Endgerätevorrichtung, bevor die erste Endgerätevorrichtung das HF-Feld wieder verlässt, keine Kartenlesefunktion in der NFC-Funktion aktiviert; und
ein Lesen eines Zahlungsdatensatzes der HF-Karte als Reaktion darauf, dass die erste Endgerätevorrichtung in das HF-Feld eintritt und das HF-Feld innerhalb einer voreingestellten Zeit (102) wieder verlässt, Folgendes umfasst:
Aktivieren der Kartenlesefunktion als Reaktion darauf, dass die erste Endgerätevorrichtung in das HF-Feld eintritt und das HF-Feld innerhalb der voreingestellten Zeit (202) wieder verlässt; und
Lesen des Zahlungsdatensatzes der HF-Karte (203).

2. Datenverarbeitungsverfahren nach Anspruch 1, wobei das Verfahren nach Lesen des Zahlungsdatensatzes der HF-Karte (203) Folgendes umfasst:
Erfassen von Standortinformationen der ersten Endgerätevorrichtung (301); und
ein Senden des Zahlungsdatensatzes an eine zweite Endgerätevorrichtung (103) Folgendes umfasst:
Senden der Standortinformationen der ersten Endgerätevorrichtung und des Zahlungsdatensatzes an die zweite Endgerätevorrichtung (302).

3. Datenverarbeitungsverfahren nach Anspruch 2, wobei ein Senden der Standortinformationen der ersten Endgerätevorrichtung und des Zahlungsdatensatzes an die zweite Endgerätevorrichtung (302) Folgendes umfasst:
Übermitteln der Standortinformationen der ersten Endgerätevorrichtung in dem Zahlungsdatensatz.

4. Datenverarbeitungsverfahren nach einem der Ansprüche 1 bis 3, wobei ein Lesen des Zahlungsdatensatzes der HF-Karte (203) Folgendes umfasst:
Lesen der HF-Karte und Erfassen von Saldoinformationen der HF-Karte; und
als Reaktion darauf, dass die Saldoinformationen gleich sind wie vorherige Saldoinformationen, die beim letzten Mal erfasst wurden, Bestimmen, dass keine Zahlung unter Verwendung der HF-Karte erfolgt ist, und erneutes Erkennen, ob die erste Endgerätevorrichtung in das HF-Feld eintritt; oder
als Reaktion darauf, dass sich die Saldoinformationen von vorherigen Saldoinformationen unterscheiden, die beim letzten Mal erfasst wurden, Erfassen des Zahlungsdatensatzes der HF-Karte.

5. Datenverarbeitungsverfahren nach Anspruch 1, wobei dass die erste Endgerätevorrichtung mit einer HF-Karte versehen ist, Folgendes umfasst:
ein Kartenschlitz ist an einer Innenseite oder einer Außenseite eines hinteren Gehäuses der ersten Endgerätevorrichtung bereitgestellt, und der Kartenschlitz ist zum Fixieren der HF-Karte konfiguriert.

6. Datenverarbeitungsverfahren nach einem der Ansprüche 1 bis 3, wobei ein Erkennen, ob eine erste Endgerätevorrichtung in ein HF-Feld eintritt, Folgendes umfasst:
Erkennen, gemäß einer Identifizierungsnachricht, ob die erste Endgerätevorrichtung in das HF-Feld eintritt, wobei die Identifizierungsnachricht mindestens eine Nachricht HF_FIELD_INFO_NTF umfasst; und
ein Erkennen, ob die erste Endgerätevorrichtung das HF-Feld innerhalb der voreingestellten Zeit wieder verlässt, Folgendes umfasst:
Erkennen, gemäß der Identifizierungsnachricht, ob die erste Endgerätevorrichtung das HF-Feld innerhalb der voreingestellten Zeit wieder verlässt.

7. Datenverarbeitungsverfahren nach Anspruch 1, wobei die NFC-Funktion der ersten Endgerätevorrichtung die ganze Zeit aktiviert ist, um in Echtzeit zu erkennen, ob die erste Endgerätevorrichtung in das HF-Feld eintritt.

8. Datenverarbeitungsverfahren nach Anspruch 5, wobei der Kartenschlitz an einer Position nahe einer NFC-Antenne der ersten Endgerätevorrichtung angeordnet ist.

9. Datenverarbeitungsverfahren nach Anspruch 5, wobei ein Kartenclip an der Außenseite des hinteren Gehäuses der ersten Endgerätevorrichtung angeordnet ist, der Kartenclip zum Fixieren der HF-Karte konfiguriert ist, und eine Position des Kartenclips einer Position einer NFC-Antenne entspricht.

10. Datenverarbeitungsverfahren nach Anspruch 1, wobei als Reaktion darauf, dass die erste Endgerätevorrichtung ihren Eintritt in das HF-Feld nicht erkennt, die erste Endgerätevorrichtung in einem Erfassungszustand bleibt, bis die erste Endgerätevorrichtung ihren Eintritt in das HF-Feld erkennt.

11. Datenverarbeitungsverfahren nach Anspruch 1, wobei nach Erfassen des Zahlungsdatensatzes der HF-Karte, ein Senden des erfassten Zahlungsdatensatzes der HF-Karte durch die erste Endgerätevorrichtung an die zweite Endgerätevorrichtung in Form einer Nachricht eines Kurznachrichtendienstes, SMS gemäß einer Telefonnummer der zweiten Endgerätevorrichtung.

12. Datenverarbeitungssystem, umfassend eine erste Endgerätevorrichtung (601), eine Karte für Hochfrequenz, HF, (602) und eine zweite Endgerätevorrichtung (603), wobei die erste Endgerätevorrichtung (601) mit der HF-Karte (602) versehen ist;
wobei die erste Endgerätevorrichtung (601) konfiguriert ist, um zu erkennen, ob die erste Endgerätevorrichtung (601) in ein HF-Feld eintritt, einen Zahlungsdatensatz der HF-Karte (602) als Reaktion darauf zu lesen, dass die erste Endgerätevorrichtung (601) in das HF-Feld eintritt und das HF-Feld innerhalb einer voreingestellten Zeit wieder verlässt, und den Zahlungsdatensatz an die zweite Endgerätevorrichtung (603) zu senden;
die HF-Karte (602) konfiguriert ist, um als Reaktion darauf, dass die erste Endgerätevorrichtung (601) in das HF-Feld eintritt und das HF-Feld innerhalb der voreingestellten Zeit wieder verlässt, eine Zahlung über das HF-Feld vorzunehmen; und die zweite Endgerätevorrichtung (603) zum Empfangen des Zahlungsdatensatzes konfiguriert ist, der von der ersten Endgerätevorrichtung (601) gesendet wird;
**dadurch gekennzeichnet, dass**
die erste Endgerätevorrichtung (601) konfiguriert ist, um, bevor die erste Endgerätevorrichtung (601) das HF-Feld wieder verlässt, eine Kartenlesefunktion in der NFC-Funktion nicht zu aktievieren; und
ein Lesen eines Zahlungsdatensatzes der HF-Karte (602) als Reaktion darauf, dass die erste Endgerätevorrichtung (601) in das HF-Feld eintritt und das HF-Feld innerhalb einer voreingestellten Zeit wieder verlässt, Folgendes umfasst:
Aktivieren der Kartenlesefunktion als Reaktion darauf, dass die erste Endgerätevorrichtung (601) in das HF-Feld eintritt und das HF-Feld innerhalb der voreingestellten Zeit wieder verlässt; und
Lesen des Zahlungsdatensatzes der HF-Karte (602).

13. Endgerätevorrichtung, umfassend:
mindestens einen Prozessor (701); und
einen Speicher (702), der kommunikativ mit dem mindestens einen Prozessor (701) verbunden ist, wobei:
der Speicher (702) Anweisungen speichert, die von dem mindestens einen Prozessor (701) ausführbar sind, die, wenn sie von dem mindestens einen Prozessor (701) ausgeführt werden, den mindestens einen Prozessor (701) veranlassen, das Datenverarbeitungsverfahren nach einem der Ansprüche 1 bis 11 durchzuführen.

14. Computerlesbares Speichermedium, das ein Computerprogramm speichert, das, wenn es von einem Prozessor ausgeführt wird, den Prozessor veranlasst, das Datenverarbeitungsverfahren nach einem der Ansprüche 1 bis 11 durchzuführen.

## Revendications

1. Procédé de traitement de données, exécuté par un premier dispositif terminal, le procédé comprenant :
détecter si le premier dispositif terminal entre dans un champ radiofréquence, RF, dans lequel le premier dispositif terminal a activé une fonction de communication en champ proche, NFC, le premier dispositif terminal est équipé d'une carte RF, et la carte RF est configurée pour effectuer un paiement via le champ RF (101) ;
lire un historique de paiement de la carte RF en réponse à l'entrée du premier dispositif terminal dans le champ RF et à sa sortie du champ RF dans un délai prédéfini (102) ; et
envoyer l'historique de paiement à un deuxième dispositif terminal (103) ;
**caractérisé en ce que**,
avant que le premier dispositif terminal ne quitte le champ RF, il n'active pas la fonction de lecture de carte dans la fonction NFC ; et
la lecture d'un historique de paiement de la carte RF en réponse à l'entrée du premier dispositif terminal dans le champ RF et à sa sortie du champ RF dans un délai prédéfini (102) comprend :
l'activation de la fonction de lecture de la carte RF en réponse à l'entrée du premier dispositif terminal dans le champ RF et à sa sortie du champ RF dans le délai prédéfini (202) ; et
la lecture de l'historique de paiement de la carte RF (203).

2. Procédé de traitement de données selon la revendication 1, dans lequel après la lecture de l'historique de paiement de la carte RF (203), le procédé comprend :
l'acquisition des informations de localisation du premier dispositif terminal (301) ; et
l'envoi de l'historique de paiement à un deuxième dispositif terminal (103) comprend :
l'envoi des informations de localisation du premier dispositif terminal et de l'historique de paiement au deuxième dispositif terminal (302).

3. Procédé de traitement de données selon la revendication 2, dans lequel l'envoi des informations de localisation du premier dispositif terminal et de l'historique de paiement au deuxième dispositif terminal (302) comprend :
le transport des informations de localisation du premier dispositif terminal dans l'historique de paiement.

4. Procédé de traitement de données selon l'une quelconque des revendications 1 à 3, dans lequel la lecture de l'historique de paiement de la carte RF (203) comprend :
la lecture de la carte RF et l'acquisition des informations relatives au solde de la carte RF ; et
en réponse au fait que les informations relatives au solde sont identiques aux informations relatives au solde précédent acquises la fois précédente, déterminer qu'aucun paiement n'a été effectué à l'aide de la carte RF, et détecter à nouveau si le premier dispositif terminal entre dans le champ RF ; ou
en réponse à la différence entre les informations relatives au solde et les informations relatives au solde précédent acquises la fois précédente, acquérir l'historique des paiements de la carte RF.

5. Procédé de traitement de données selon la revendication 1, dans lequel le premier dispositif terminal comportant une carte RF comprend :
un lecteur de carte est prévu sur un côté intérieur ou extérieur d'un boîtier arrière du premier dispositif terminal, et le lecteur de carte est configuré pour fixer la carte RF.

6. Procédé de traitement de données selon l'une quelconque des revendications 1 à 3, dans lequel la détection de l'entrée d'un premier dispositif terminal dans un champ RF comprend :
détecter, à partir d'un message d'identification, si le premier dispositif terminal entre dans le champ RF, le message d'identification comprenant au moins un message RF_FIELD_INFO_NTF ; et
détecter si le premier dispositif terminal quitte le champ RF dans le délai prédéfini comprend :
la détection à partir du message d'identification, si le premier dispositif terminal quitte le champ RF dans le délai prédéfini.

7. Procédé de traitement de données selon la revendication 1, dans lequel la fonction NFC du premier dispositif terminal est activée en permanence afin de détecter en temps réel si le premier dispositif terminal entre dans le champ RF.

8. Procédé de traitement de données selon la revendication 5, dans lequel le lecteur de carte est disposé à proximité d'une antenne NFC du premier dispositif terminal.

9. Procédé de traitement de données selon la revendication 5, dans lequel, une pince à carte est disposée sur le côté extérieur du boîtier arrière du premier dispositif terminal, la pince à carte est configurée pour fixer la carte RF, et une position de la pince à carte correspond à une position d'une antenne NFC.

10. Procédé de traitement de données selon la revendication 1, dans lequel, en réponse au fait que le premier dispositif terminal ne détecte pas son entrée dans le champ RF, le premier dispositif terminal reste dans un état de détection, jusqu'à ce que le premier dispositif terminal détecte son entrée dans le champ RF.

11. Procédé de traitement de données selon la revendication 1, dans lequel, après avoir acquis l'historique de paiement de la carte RF, envoyer, au moyen du premier dispositif terminal, l'historique de paiement acquis de la carte RF au deuxième dispositif terminal sous la forme d'un message SMS (Service de Messages Courts) en fonction d'un numéro de téléphone du deuxième dispositif terminal.

12. Système de traitement de données, comprenant un premier dispositif terminal (601), une carte radiofréquence RF (602) et un deuxième dispositif terminal (603), dans lequel le premier dispositif terminal (601) est équipé de la carte RF (602) ;
le premier dispositif terminal (601) est configuré pour détecter si le premier dispositif terminal (601) entre dans un champ RF, lire un historique de paiement de la carte RF (602) en réponse à l'entrée du premier dispositif terminal (601) dans le champ RF et à sa sortie du champ RF dans un délai prédéfini, et envoyer l'historique de paiement au deuxième dispositif terminal (603) ; la carte RF (602) est configurée pour effectuer un paiement via le champ RF en réponse à l'entrée du premier dispositif terminal (601) dans le champ RF et à sa sortie du champ RF dans un délai prédéfini ; et
le deuxième terminal (603) est configuré pour recevoir l'historique de paiement envoyé par le premier dispositif terminal (601) ;
**caractérisé en ce que**,
le premier dispositif terminal (601) est configuré pour, avant que le premier dispositif terminal (601) ne quitte le champ RF, il n'active pas une fonction de lecture de carte dans la fonction NFC ; et
la lecture d'un historique de paiement de la carte RF (602) en réponse à l'entrée du premier dispositif terminal (601) dans le champ RF et à sa sortie du champ RF dans un délai prédéfini (102) comprend :
l'activation de la fonction de lecture de la carte RF en réponse à l'entrée du premier dispositif terminal (601) dans le champ RF et à sa sortie du champ RF dans le délai prédéfini ; et
la lecture de l'historique de paiement de la carte RF (602).

13. Dispositif terminal, comprenant :
au moins un processeur (701) ; et
une mémoire (702) connectée de manière communicante à l'au moins un processeur (701), dans lequel :
la mémoire (702) stocke des instructions exécutables par l'au moins un processeur (701) qui, lorsqu'elles sont exécutées par l'au moins un processeur (701), amènent au moins un processeur (701) à exécuter le procédé de traitement de données selon l'une quelconque des revendications 1 à 11.

14. Support de stockage lisible par ordinateur stockant un programme informatique qui, lorsqu'il est exécuté par un processeur, amène le processeur à exécuter le procédé de traitement de données selon l'une quelconque des revendications 1 à 11.
